# EUROPEAN PATENT APPLICATION

(11) **EP 1 088 583 A2**
(43) Date of publication of application: **04.04.2001**
(21) Application number: 00308494.4
(22) Date of filing: 27.09.2000
(51) Int. Cl.: B01J 4/00, B41J 2/175

(54) **Liquid-drop discharge device**

(30) Priority: 28.09.1999 JP 27504499
(71) Applicant: NGK INSULATORS, LTD., Nagoya-City, Aichi Prefecture 467-8530 (JP)
(72) Inventor: Ohnishi, Takao, c/o NGK Insulators, Ltd., Nagoya-shi, Aichi-ken 467-8530 (JP); Hirota, Toshikazu, c/o NGK Insulators, Ltd., Nagoya-shi, Aichi-ken 467-8530 (JP); Takeuchi, Yukihisa, c/o NGK Insulators, Ltd., Nagoya-shi, Aichi-ken 467-8530 (JP)
(74) Representative: Paget, Hugh Charles Edward

(57) **Abstract**

The liquid-drop discharge device is comprised of a liquid discharge means for discharging liquid within a float cell communicating to a liquid storage tank, a reaction cell for collecting discharged fluid, and a differential adjusting tube provided between the float cell and the reaction cell and comprising a release valve for maintaining a specified relationship between an internal pressure P2 of the float cell and an internal pressure P3 of the reaction cell; a driving circuit for driving a pressurizing source of the liquid discharge device is connected to a control unit while the control unit is connected to a pressure sensor for detecting the internal pressure of the reaction cell and the release valve; and the internal pressure P1 of the liquid storage tank is controlled to be larger than the internal pressure P3 of the reaction cell.

## Description

### Background of the Invention

### Field of the Invention

The present invention relates to a liquid-drop discharge device used in various apparatuses for processing liquid by performing discharge of liquid.

### Description of the Prior Art

Ink jet discharge devices as disclosed, for instance, in Japanese Patent Unexamined Publication No. 6-40030 (1994) are conventionally known types of devices for discharging liquid in form of minute particles used in particular fields. However, such discharge devices are used in offices or schools under relatively stationary conditions with little fluctuations in temperature or pressure of peripheral environments when being used, and are not exposed to significant fluctuations in operating environments.

On the other hand, minute powder of various chemicals are being used as auxiliary products for manufacturing semiconductors or the like, wherein required standards in view of particle size can not be achieved by simply using mechanical crushing means, and it is being wanted for developments in manufacturing methods of new types of powder. It is urgently necessary to employ, as one exemplary method, a method for supplying raw materials in forms of minute particles to reaction cells such as drying chambers in a stable manner. It is thus being strongly wanted for devices that may be used with such methods for dropping liquid as particles of several hundreds nanometer to several tens micron in a stable and controlled manner. While remarkable fluctuations in environments of discharge spaces are likely to occur at the time of operating such devices owing to fluctuations in operating conditions or the like, it is presently the case that no device has yet been proposed with which supply liquid can be supplied as minute particles in a desirable manner even though in the presence of fluctuations in discharge spaces.

### Summary of the Invention

The present invention has been made with the aim of providing a liquid discharge device for raw materials or the like, The device may be arranged to continuously adjust a condition for discharging liquid to be an optimal condition in accordance with fluctuating peripheral environments, and may stably discharge liquid even though the environment may be one in which the discharge space is apt to abrupt and accident fluctuations.

According to the invention in one aspect there is provided as recited in Claim 1, a liquid-drop discharge device made up of a plurality of liquid-drop discharge units each comprising a liquid discharge nozzle for discharging liquid within a liquid storage tank, a pressurizing chamber for pressuring liquid to be discharged through the nozzle, an introducing hole for supplying liquid to the pressurizing chamber, and a piezoelectric/electrostrictive element for causing pressurizing operations, the liquid-drop discharge device further comprising a liquid discharge means with respective liquid introducing holes of adjoining liquid-drop discharge units being connected to a common liquid supply path, and a reaction cell provided with a space to which the nozzles are opened for discharging liquid, wherein P1>P3 is satisfied when P1 and P3 respectively represent an internal pressure of the liquid storage tank and an internal pressure of the reaction cell. With this arrangement, the internal pressure of the reaction cell becomes a negative pressure with respect to the liquid storage tank so that liquid-drops of the discharge holes may be effectively dispersed through driving force of the pressurizing chamber reinforced by absorbing force to the negative pressure space to thereby enable spraying by large amounts.

It should be noted that for the purpose of appropriately performing spraying in case the pressure of the reaction cell is lower than the internal pressure of the liquid storage tank or that of a liquid reservoir, it is known for a method wherein spraying is not directly performed from a spraying outlet of a liquid chamber tithe reaction cell but wherein a separate pressurizing chamber is provided between the spraying outlet and the reaction cell for adjusting an internal pressure of this pressurizing chamber to be equal to the internal pressure of the liquid chamber and then performing spraying from the spraying outlet to the reaction cell through the pressurizing chamber. This method, however, is not capable of realizing spraying by large amounts.

A second aspect as recited in Claim 2 relates to a liquid-drop discharge device comprising a liquid storage tank, a liquid reservoir of a specified capacity that is connected by means of a check valve, a liquid discharge means for discharging liquid within the liquid reservoir, and a reaction cell provided with a space into which liquid is discharged from the liquid discharge means, the liquid discharge means being arranged of a plurality of adjoining liquid-drop discharge units respectively connected to a liquid supply path communicating with the liquid reservoir, and each liquid-drop discharge unit comprising a liquid discharge nozzle opening to the reaction cell, a pressurizing chamber for pressurizing liquid to be discharged through the nozzle, an introducing hole for supplying liquid from the liquid supply path to the pressurizing chamber, and a piezoelectric/electrostrictive element for causing pressurizing operations, wherein a differential regulating tube is provided between the liquid reservoir and the reaction cell to connect these members for maintaining a specified relationship between an internal pressure of the liquid reservoir and an internal pressure of the reaction cell, and wherein the differential regulating tube is controlled to satisfy P1≧P2≧P3 when P1, P2 and P3 respectively represent an internal pressure of the liquid storage tank, the internal pressure of the liquid reservoir, and the internal pressure of the reaction cell. With this arrangement, it is possible to prevent backflow of fluid from the reaction cell to the liquid reservoir or from the liquid reservoir to the liquid storage tank, in addition to the same effects as achieved by the invention as recited in Claim 1.

It is desirable to provide a float reservoir as the liquid reservoir that is provided with a function of maintaining a liquid surface level constant for preventing backflow of liquid to the liquid storage tank and for maintaining a pressure at which liquid is supplied to the liquid-drop units constant as in the invention as recited in Claim 3. It is further desirable to set the internal pressure P1 of the liquid storage tank to be an atmospheric pressure for enabling successive supply of liquid as in the invention as recited in Claim 4.

It is further desirable to control the differential P2-P3 of the internal pressure P2 of the liquid reservoir and the internal pressure P3 of the reaction cell to be constant as in the invention as recited in Claim 5. With this arrangement, it is possible to avoid cases in which adjustments of spraying amounts cannot be performed when the differential becomes too large to cause leakage of liquid in case of utilizing this differential for spraying by large amounts, and this arrangement is further favorable in view of stabilizing the spraying amount.

The invention as recited in Claim 6 relates to the liquid-drop discharge device wherein the internal pressure P2 of the liquid reservoir is maintained to be at a specified pressure value or to exceed the specified pressure value by using a regulating valve provided at the differential regulating tube or the liquid reservoir. With this arrangement, the regulating valve may be controlled for performing spraying by large amounts and the internal pressure P2 of the liquid reservoir will be in a negative pressure condition from the specified pressure value to thereby prevent air bubbles adhering to inner walls of the liquid reservoir or other members from expanding. In view of the overall means as recited in Claim 2 and all the following claims, control is performed to satisfy atmospheric pressure ≧ P2 ≧ specified pressure value ≧ P3.

A favorably used regulating valve may be, for instance, a leak valve arranged in that a valve body pressurizes a valve seat to close the same through an urging member and for releasing the valve body from the valve seat against urging force of the urging member when the internal pressure of the reaction cell is in a specified negative pressure condition; a solenoid valve in which releasing and closing operations are controlled at timings based on values of internal pressure of the reaction cell or the like as detected by a detector; or a regulator or the like.

The invention as recited in Claim 7 relates to the liquid-drop discharge device wherein the regulating valve is connected to a control unit for inputting closing or releasing instructions from the control unit in accordance with control signals for driving or terminating the liquid discharge means.

When the regulating valve is mounted to the differential adjusting tube, it is possible to employ a means for outputting a control signal for closing a release valve which the control unit had released for setting the internal pressure P3 of the reaction cell and the internal pressure P2 of the liquid reservoir to be substantially equal for increasing the amount of discharged liquid-drops from the liquid discharge means and for outputting a control signal for driving the liquid discharge means the moment P3>P2 is satisfied; a control means for outputting a control signal for closing the release valve and outputting a control signal for driving the liquid discharge means after a specified delay in view of response of the regulating valve or response of pressure; or a precise control means for first outputting a control signal for closing the release valve that is in a released condition and then outputting a control signal for driving the liquid discharge means from the control unit upon detection of a negative pressure condition within the reaction cell by using a pressure sensor.

On the other hand, when the regulating valve is mounted to the liquid reservoir, it is possible to favorably employ a control means for outputting a control signals for releasing a leak valve that had been closed by the control unit for setting the internal pressure P3 of the reaction cell and the internal pressure P2 of the liquid reservoir to be substantially equal and driving the liquid discharge means either the moment P3>P2 is satisfied or at a somewhat delayed timing by a specified time in view of response of the regulating valve or pressure; or a control means for driving the liquid discharge means in accordance with signals from the pressure sensor provided within the reaction cell.

The invention also consists in the methods of liquid drop discharge herein described.

### Brief Explanation of the Drawings

Fig. 1 is an explanatory view of the liquid-drop discharge device.
Fig. 2 is an explanatory view showing operations of a control unit.
Fig. 3 is an explanatory view showing a pressure relationship between internal pressures P2 and P3 and amount of spraying with a regulator being mounted.

### Description of the Preferred Embodiments

Forms for embodying the liquid-drop discharge device according to the present invention will now be explained in details.

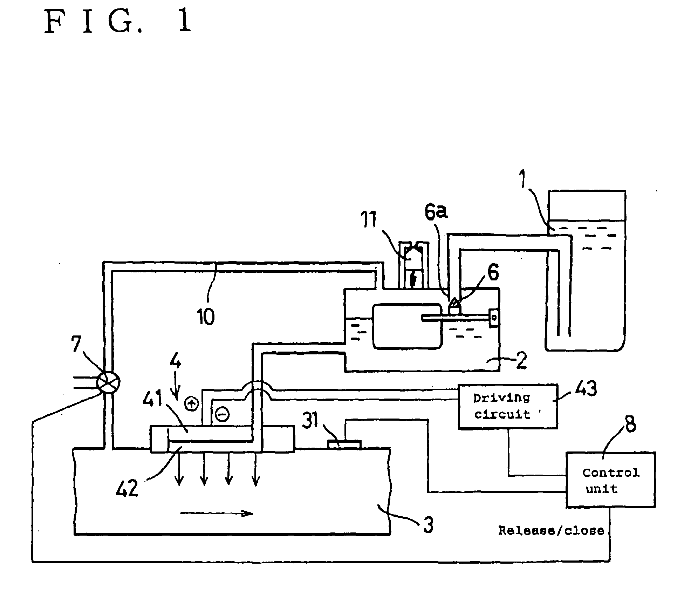

Fig. 1 is a schematic view of the liquid-drop discharge device 1. The liquid-drop discharge device is comprised of a float cell 2 provided with a valve 6 and being communicating to a liquid storage tank 1, a liquid discharge means 4 for discharging liquid within the float cell 2, a reaction cell 3 for collecting discharged fluid, and a differential adjusting tube 10 provided between the float cell 2 and the reaction cell 3 and comprising a release valve 7 for maintaining a specified relationship between an internal pressure P2 of the float cell 2 and an internal pressure P3 of the reaction cell 3. A driving circuit 43 for driving a piezoelectric/electrostrictive element 41 for making the liquid discharge means 4 perform pressurizing operations is connected to a control unit 8 while the control unit 8 is connected to a pressure sensor 31 for detecting the internal pressure of the reaction cell 3 and the release valve 7.

Wind is supplied to the reaction cell 3 in a direction as indicated by the arrow, and its internal pressure is detected by the pressure sensor 31 mounted to a wall surface thereof. The liquid discharge means 4 that is similarly mounted to the wall surface is formed with a plurality of discharge holes of diameters of several nanometer to several tens micron on an inner surface thereof while a pressurizing chamber 42 with a pressurizing source 41 being mounted is formed on an outer surface thereof, and one end of the pressurizing chamber 42 is connected to the float cell 2 through a tubular path. A liquid surface level of the float cell 2 is adjusted by means of the valve 6 of a tube aperture 6a communicating to the liquid storage tank. It is preferable to mount a diaphragm to the differential adjusting tube 10 connected to one end of the float cell 2 for preventing backflow of reaction gas from the reaction cell 3.

It will now be explained for processes of manufacturing ceramic powder with uniform particle distribution by using zirconia of ceramic material as liquid. A fluid slurry is adjusted by mixing the zirconia with a suitable agent. By discharging this slurring into the reaction cell 3 to which hot wind is being send through the liquid discharge device, binders included in the discharged slurry are cured and dried so that cured particles are collected at a final end of the reaction cell 3. By supplying these particles to a thermal cracking path, zirconia powder of targeted particle sizes can be obtained.

The control unit 8 performs control of a degree of spraying amount by being connected to the pressurizing source 41, the release valve 7 that is released/closed in accordance with electric signals and the pressure sensor 31 through the driving circuit 43.

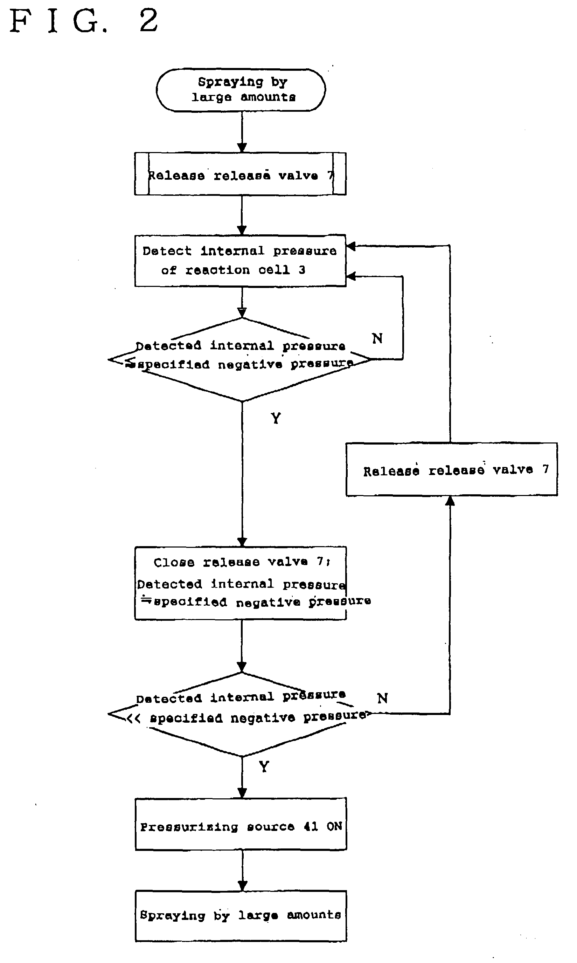

Fig. 2 is an explanatory view showing operations of the control unit 8 of Fig. 1. In the control unit 8, an internal pressure value of the reaction cell 3 is read from the pressure sensor 31, and when a specified pressure (negative pressure) has been reached, the control unit 8 sends instructions for closing the release valve 7 to set the internal pressure of the float cell 2 to be a specified value.

Thereafter, it is confirmed that the internal pressure value of the reaction cell 3 has become a negative pressure from the specified negative pressure condition upon receipt of a signal from the pressure sensor 31, and a signal is output to the driving circuit 43 for switching the pressurizing source 41 ON. Accordingly, the pressurizing chamber 42 of the liquid discharge means 4 is pressurized by the pressurizing source 41 to thereby cause liquid-drops from being discharged through the discharge holes. Since these liquid-drops are jetting out from the discharge holes as if being pulled out by the negative pressure condition of the reaction cell 3, no liquid drains will be caused by being accumulated at the discharge holes but spraying can be performed by reinforcing the discharge force by the negative pressure, and it is thus possible to perform spraying by large amounts.

When terminating spraying, the control unit 8 acts to make the driving circuit 43 output a signal for turning the pressurizing source 41 OFF and a release instruction is output to the release valve 7. The timing may be favorably set to provide suitable time differences in view of response of the regulating valve or response of pressure.

On the other hand, in case only a small amount is to be sprayed instead of a large amount, no instruction for closing the release valve 7 is output from the control unit 8 even though an instruction for performing spraying by a small amount is output at timing T3 from the control unit 8 and the driving circuit 43 outputs a signal for turning the pressurizing source 41 ON. With this arrangement, the release valve 7 is maintained in the released condition and the internal pressure P3 of the reaction cell 3 and the internal pressure P2 of the float cell 2 are in equal pressure conditions, a small amount of liquid-drops are successively sprayed through pressurizing force of the pressurizing source 41 only.

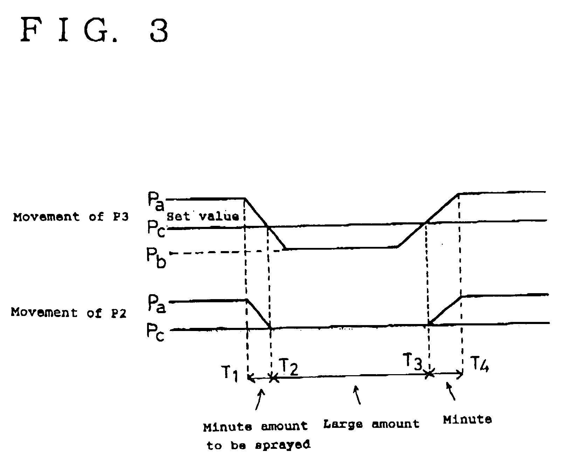

Fig. 3 is an explanatory view for showing another form of embodiment, and is an explanatory view showing operations of a liquid-drop discharge device employing regulators instead of a solenoid valve.

Negative pressure values Pc are preliminarily set for regulators respectively mounted to the differential adjusting tube and the liquid reservoir such that air bubbles remaining the liquid reservoir or in a pipe connecting the liquid reservoir and the liquid discharge means will not be expanded for decreasing the amount of spraying. In case the internal pressure P3 of the reaction cell 3 that is being detected by the sensor has decreased (timing T1) to be in a specified negative pressure condition Pc (timing T2), the regulators are actuated for maintaining the specified negative pressure condition Pc. In case an instruction for increasing the amount of liquid-drop to be discharged from the liquid discharge means 4 is simultaneously output, liquid-drops discharged from the liquid discharge means 4 are absorbed through negative pressure force of the reaction cell 3 to thereby enable a spraying condition of a large amount in a smooth manner. On the other hand, in case an instruction is output for setting the amount of liquid-drops to be discharged from the liquid discharge means 4 to be a minute amount when the internal pressure P3 of the reaction cell 3 has increased from the specified negative pressure condition to return to be not less than the set value Pc (timing T3), no absorbing force will be present since the internal pressure P2 of the float cell 2 is substantially equal to the internal pressure P3 of the reaction cell 3 so that spraying of minute amounts can be performed in a smooth manner.

A leak valve 11 mounted to the float cell 2 is closed with a valve body pressurizing a valve seat by means of an urging member. In case the internal pressure of the reaction cell 3 comes to the specified negative pressure condition, the valve body is pulled in the negative pressure direction against urging force so that the valve body is parted from the valve seat for achieving release. In case an instruction for increasing the amount of liquid-drops to be discharged from the liquid discharge means 4 is output in the meantime, liquid-drops discharged from the liquid discharge means 4 are absorbed by negative pressure force of the reaction cell 3 to thereby perform spraying in a smooth manner. On the other hand, in case the internal pressure of the reaction cell 3 is the specified set negative pressure value or more, the valve body is contacting the valve seat through the urging force for closing the valve so that in case an instruction is output for setting the amount of liquid-drops to be discharged from the liquid discharge means 4 to be a minute amount during this period, no absorbing force owing to the negative pressure will be present since the internal pressure P2 of the float cell 2 is substantially identical to the internal pressure P2, and spraying by minute amounts can be performed in a smooth manner.

It should be noted that shapes, sizes or materials of the respective members shall be determined in view of purpose of use or physical and chemical characteristics of liquid to be discharged, and the reaction cell 3, for instance, may be made of stainless steel or a member which inner surface is lined by glass or similar in case the cell shall act as a reaction unit for gaseous reaction, or made of stainless steel members in case the cell shall act as a drying chamber for liquid. The liquid discharge means 4 is favorably formed of ceramic materials in view of chemical resistance and solvent resistance.

It is further possible to mount a safety valve to one end of the float cell 2 for releasing the pressure within the float cell 2 and making the internal pressure of the float cell 2 to be equal to the pressure of the peripheral environment in case of emergency to be ready for coping with occurrence of abnormal conditions of the float cell 2.

As explained so far, since P1>P3 is satisfied when P1 and P3 respectively represent an internal pressure of the liquid storage tank and an internal pressure of the reaction cell in the liquid-drop discharge device of the invention as recited in Claim 1, the internal pressure of the reaction cell will be a negative pressure with respect to the liquid storage tank so that liquid-drops of the discharge holes may be effectively dispersed through driving force of the pressurizing chamber reinforced by absorbing force to the negative pressure space, and it will no more be necessary to provide a plurality of discharge holes or to provide a large-sized pressurizing chamber for filling liquid for performing spraying by large amounts, and spraying by large amounts can be performed while preventing leakage of fluid when performing discharge by minute amounts.

A second aspect as recited in Claim 2 relates to a liquid-drop discharge device with a differential regulating tube being provided between the liquid reservoir and the reaction cell to connect these members for maintaining a specified relationship between an internal pressure of the liquid reservoir and an internal pressure of the reaction cell, and wherein the differential regulating tube is controlled to satisfy P1≧P2≧P3 when P1, P2 and P3 respectively represent an internal pressure of the liquid storage tank, the internal pressure of the liquid reservoir, and the internal pressure of the reaction cell. With this arrangement, it is possible to prevent backflow of fluid from the reaction cell to the liquid reservoir or from the liquid reservoir to the liquid storage tank, in addition to the same effects as achieved by the invention as recited in Claim 1.

Since the liquid reservoir is comprised of a float cell provided with a function of maintaining a liquid surface level constant in the invention as recited in Claim 3, it is possible to prevent backflow of liquid to the liquid storage tank. By setting the internal pressure P1 of the liquid pressure tank to atmospheric pressure in the invention as recited in Claim 4, liquid may be successively supplied to the liquid storage tank.

In the invention as recited in Claim 5, the differential P2-P3 of the internal pressure P2 of the liquid reservoir and the internal pressure P3 of the reaction cell is controlled to be constant. With this arrangement, it is possible to avoid cases in which adjustments of spraying amounts cannot be performed when the differential becomes too large to cause leakage of liquid in case of utilizing this differential for spraying by large amounts, and this arrangement is further favorable in view of stabilizing the spraying amount.

In the invention as recited in Claim 6, the internal pressure P2 of the liquid reservoir is maintained to be at a specified pressure value or to exceed the specified pressure value by using a regulating valve provided at the differential regulating tube or the liquid reservoir. With this arrangement, the regulating valve may be controlled for performing spraying by large amounts, the internal pressure P2 of the liquid reservoir will be in a negative pressure condition from the specified pressure value to thereby prevent air bubbles adhering to inner walls of the liquid reservoir or other members from expanding, and further to prevent conditions in which liquid-drops can not be sprayed since pressurizing force is absorbed by the air bubbles.

In the invention as recited in Claim 7, the regulating valve is connected to a control unit for inputting closing or releasing instructions from the control unit in accordance with control signals for driving or terminating the liquid discharge means. It has accordingly been enabled to control the valve body synchronously with the pressurizing source of the liquid discharge means that is operated at high speed and thus to perform spraying by large amounts.

## Claims

1. A liquid-drop discharge device made up of a plurality of liquid-drop discharge units each comprising a liquid discharge nozzle for discharging liquid within a liquid storage tank, a pressurizing chamber for causing pressuring liquid to be discharged through the nozzle, an introducing hole for supplying liquid to the pressurizing chamber, and a piezoelectric/electrostrictive element for pressurizing operations, the liquid-drop discharge device further comprising a liquid discharge means with respective liquid introducing holes of adjoining liquid-drop discharge units being connected to a common liquid supply path, and a reaction cell provided with a space to which the nozzles are opened for discharging liquid,
wherein P1>P3 is satisfied when P1 and P3 respectively represent an internal pressure of the liquid storage tank and an internal pressure of the reaction cell.

2. A liquid-drop discharge device comprising a liquid storage tank, a liquid reservoir of a specified capacity that is connected by means of a check valve, a liquid discharge means for discharging liquid within the liquid reservoir, and a reaction cell provided with a space into which liquid is discharged from the liquid discharge means,
the liquid discharge means being arranged of a plurality of adjoining liquid-drop discharge units respectively connected to a liquid supply path communicating with the liquid reservoir, and
each liquid-drop discharge unit comprising a liquid discharge nozzle opening to the reaction cell, a pressurizing chamber for pressurizing liquid to be discharged through the nozzle, an introducing hole for supplying liquid from the liquid supply path to the pressurizing chamber, and a piezoelectric/electrostrictive element for causing pressurizing operations,
wherein a differential regulating tube is provided between the liquid reservoir and the reaction cell to connect these members for maintaining a specified relationship between an internal pressure of the liquid reservoir and an internal pressure of the reaction cell, and wherein the differential regulating tube is controlled to satisfy P1≧P2≧P3 when P1, P2 and P3 respectively represent an internal pressure of the liquid storage tank, the internal pressure of the liquid reservoir, and the internal pressure of the reaction cell.

3. The liquid-drop discharge device as claimed in Claim 2, wherein the liquid reservoir is a float reservoir provided with a function of maintaining a liquid surface level constant.

4. The liquid-drop discharge device as claimed in Claim 1, 2 or 3, wherein the internal pressure P1 of the liquid storage tank is atmospheric pressure.

5. The liquid-drop discharge device as claimed in Claims 2, 3 or 4, wherein a differential P2-P3 of the internal pressure P2 of the liquid reservoir and the internal pressure P3 of the reaction cell is constant.

6. The liquid-drop discharge device as claimed in any one of Claims 2, 3, 4 or 5, wherein the internal pressure P2 of the liquid reservoir is maintained to be at a specified pressure value or to exceed the specified pressure value by using a regulating valve provided at the differential regulating tube or the liquid reservoir.

7. The liquid-drop discharge device as claimed in any one of Claims 2, 3, 4, 5 or 6, wherein the regulating valve is connected to a control unit for inputting closing or releasing instructions from the control unit in accordance with control signals for driving or terminating the liquid discharge means.
